(19) **Europäisches Patentamt / European Patent Office / Office européen des brevets**

(11) **EP 4 572 445 A1**

(12) **EUROPEAN PATENT APPLICATION**
published in accordance with Art. 153(4) EPC

(43) Date of publication:
**18.06.2025 Bulletin 2025/25**

(21) Application number: **23852929.1**

(22) Date of filing: **08.08.2023**

(51) International Patent Classification (IPC):
*H04W 64/00* (2009.01)   *H04W 24/08* (2009.01)
*H04W 24/10* (2009.01)   *H04L 5/00* (2006.01)
*G01S 5/02* (2010.01)

(52) Cooperative Patent Classification (CPC):
**G01S 5/02; H04L 5/00; H04W 24/08; H04W 24/10; H04W 64/00**

(86) International application number:
**PCT/KR2023/011642**

(87) International publication number:
**WO 2024/035053 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022 KR 20220100945**

(71) Applicant: **LG Electronics Inc.**
**Yeongdeungpo-gu**
**Seoul 07336 (KR)**

(72) Inventors:
• **HWANG, Seunggye**
 **Seoul 06772 (KR)**
• **KIM, Kijun**
 **Seoul 06772 (KR)**
• **KO, Hyunsoo**
 **Seoul 06772 (KR)**
• **SHIM, Jaenam**
 **Seoul 06772 (KR)**
• **KIM, Seonwook**
 **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING OR RECEIVING WIRELESS SIGNAL IN WIRELESS COMMUNICATION SYSTEM**

(57) A method in which a first device operates in a wireless communication system according to at least one of examples disclosed in the present specification may comprise: receiving configuration information including different types of positioning-related configurations; receiving a reference signal for positioning; and transmitting a measurement report for the reference signal on the basis of at least one of the different types of positioning-related configurations, wherein event conditions are associated with the different types of positioning-related configurations, respectively, and on the basis of satisfaction of a first event condition, the first device transmits a measurement report for the reference signal on the basis of a first type of positioning-related configuration associated with the first event condition.

**FIG. 12**

**Description**

**TECHNICAL FIELD**

The present disclosure relates to a wireless communication system, and more particularly, to a method and apparatus for transmitting and receiving a wireless signal.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**Technical Problem**

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**Technical Solution**

According to an aspect, a method of operating a first device in a wireless communication system includes receiving configuration information including different types of positioning-related configurations, receiving a reference signal for positioning, and transmitting a measurement report for the reference signal based on at least one of the different types of positioning-related configurations. Event conditions may be associated with the different types of positioning-related configurations, respectively. Based on satisfaction of a first event condition, the first device may transmit a measurement report for the reference signal based on a first type of positioning-related configuration associated with the first event condition.

The configuration information may include information about the event condition associated with the different types of positioning-related configurations.

At least one of the event conditions may be related to reference signal received power (RSRP) measured via the reference signal.

The different types of positioning-related configurations may include a configuration for phase measurement-based positioning and configuration for timing-based positioning. Based on whether the associated event condition is satisfied, either the phase measurement-based positioning or the timing-based positioning may be selected by the first device.

At least one of the event conditions may be related to line of sight (LoS)/non-line of sight (NLoS) determination for the reference signal.

Measurement reports for the reference signal may be related to multiple transmission and reception points (TRPs). Satisfaction of each of the event conditions may be determined based on a reference signal from a reference TRP from among the plurality of TRPs.

The first device may receive information about at least one candidate positioning-related configuration that the first device is capable of selecting from among the different types of positioning-related configurations provided in the configuration information.

The first device may be a user equipment (UE), and the reference signal may be a downlink positioning reference signal (PRS) provided from at least one BS or at least one TRP.

The configuration information may be received via higher layer signaling from at least one BS or at least one TRP or via higher layer signaling from a LMF node.

According to another aspect, a processor-readable recording medium having recorded thereon a program for performing the method described above may be provided.

According to another aspect, a first device for performing the operation described above may be provided.

According to another aspect, a method of receiving a measurement report from a first device by a second device in a wireless communication system includes transmitting, to the first device, configuration information including different types of positioning-related configurations, and receiving, from the first device, a measurement report for a reference signal based on at least one of the different types of positioning-related configurations. Event conditions may be associated with the different types of positioning-related configurations, respectively. Based on satisfaction of a first event condition, the second device may receive, from the first device, a measurement report for the reference signal based on a first type of positioning-related configuration associated with the first event condition.

According to another aspect, a second device for performing the method of receiving a measurement report may be provided.

**Advantageous Effects**

According to an embodiment of the present disclosure, wireless signal transmission/reception procedures can be performed accurately and efficiently.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot. FIG. 1 illustrates physical channels used in a 3rd generation partnership project (3GPP) system as an exemplary wireless communication system, and a general signal transmission method using the same.

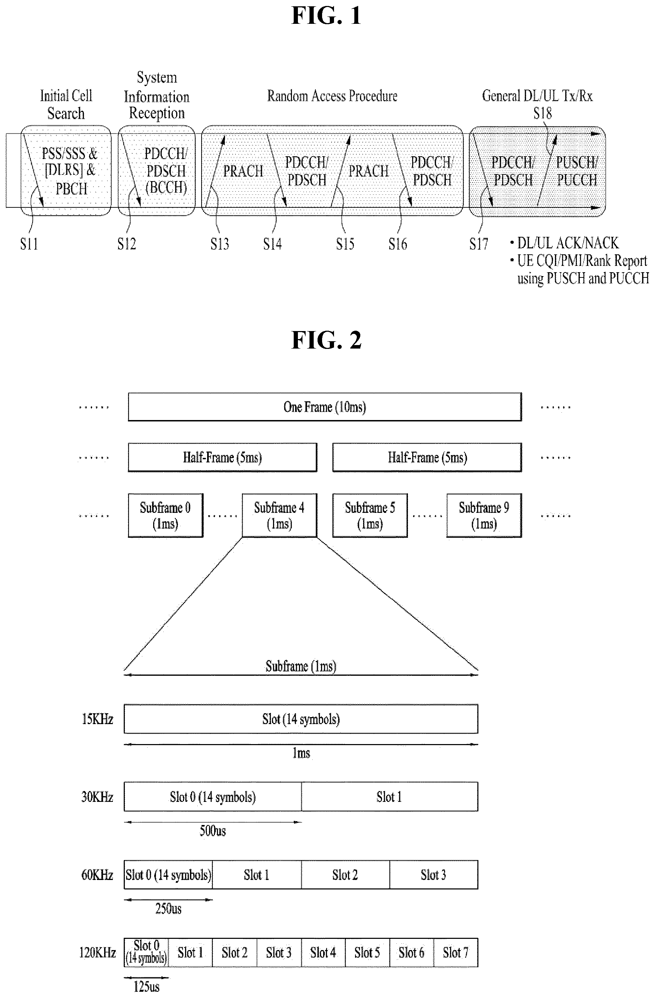

FIG. 2 illustrates a radio frame structure.

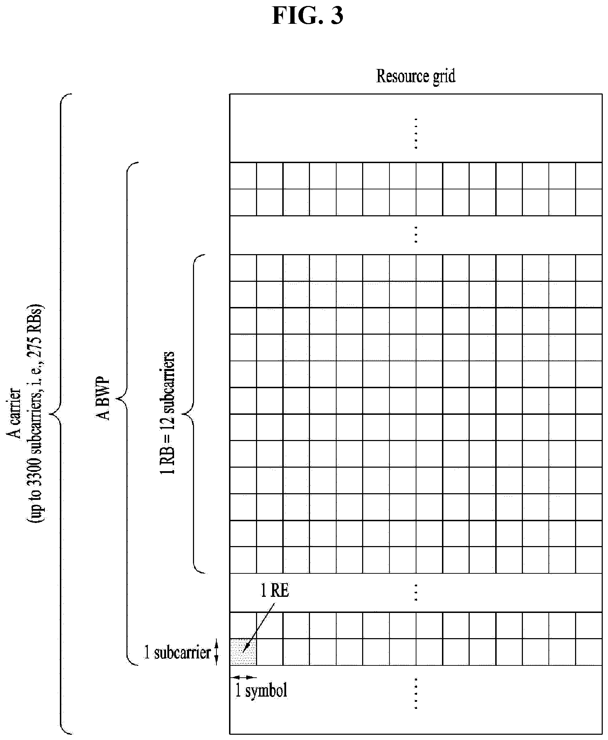

FIG. 3 illustrates a resource grid of a slot.

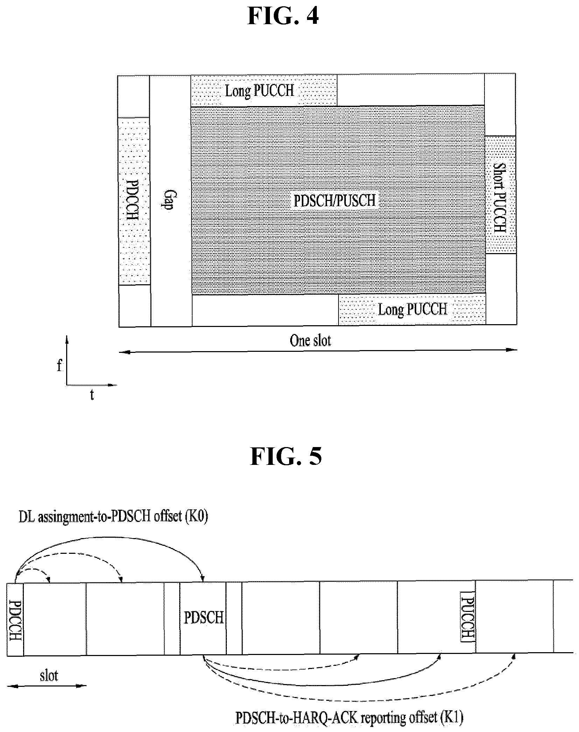

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

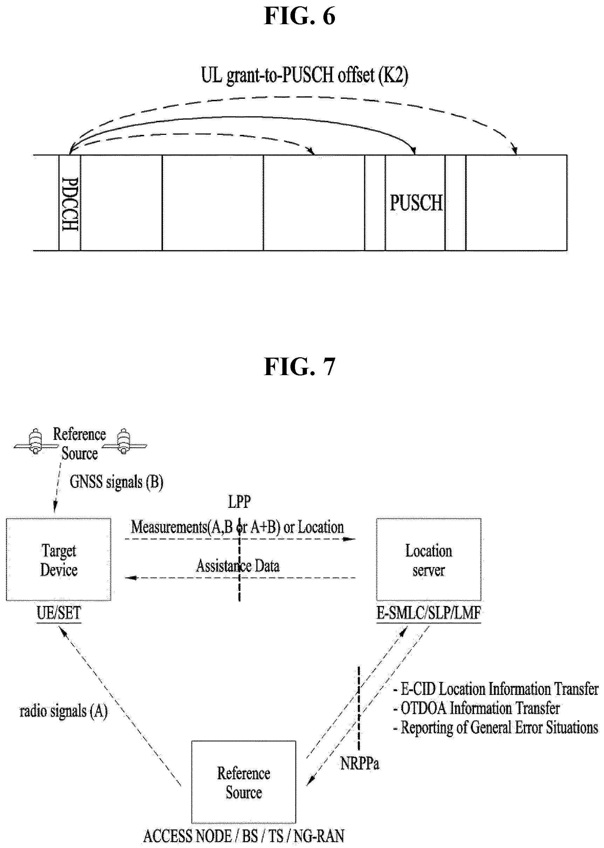

FIG. 6 illustrates an exemplary physical uplink shared channel (PUSCH) transmission process.

FIG. 7 illustrates an example of setting a positioning protocol.

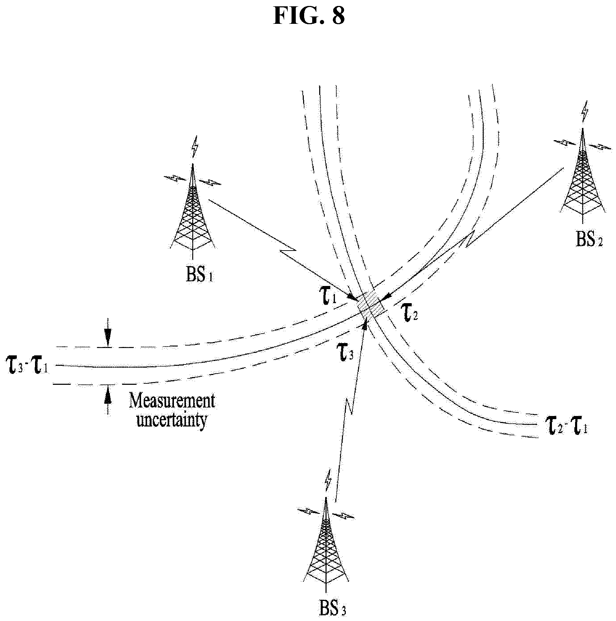

FIG. 8 illustrates an example of OTDOA.

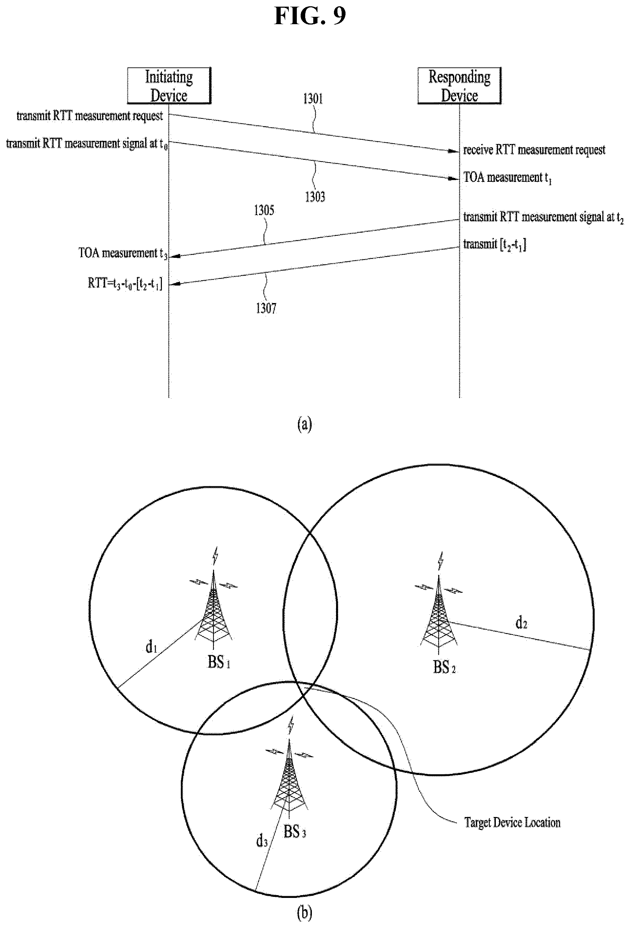

FIG. 9 illustrates an example of Multi RTT.

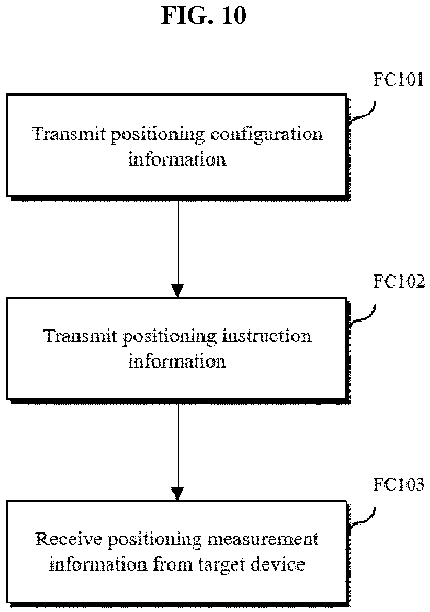

FIG. 10 illustrates a procedure for an operation of a network node (e.g., an upper node of a UE or an LMF) according to an embodiment.

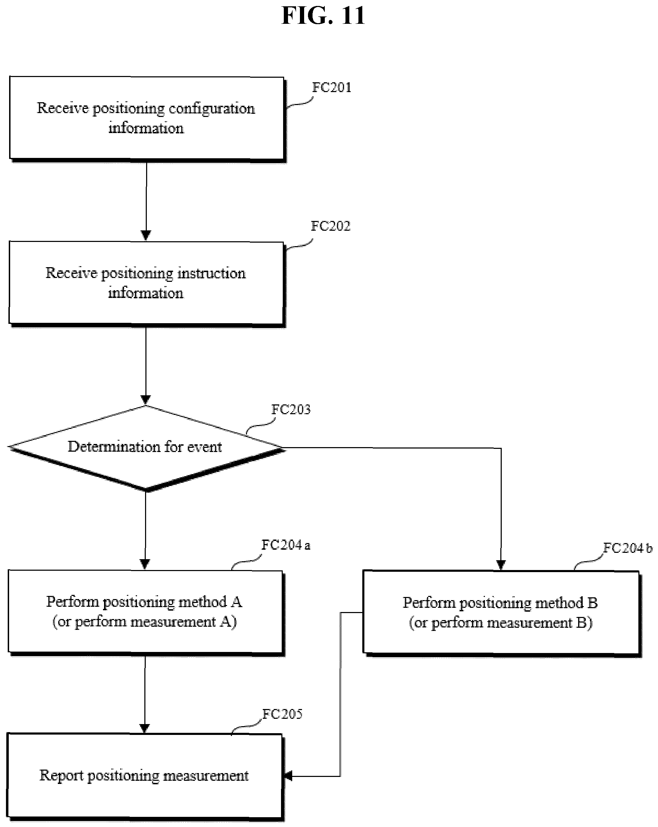

FIG. 11 illustrates a procedure of an operation of a UE that performs positioning measurement.

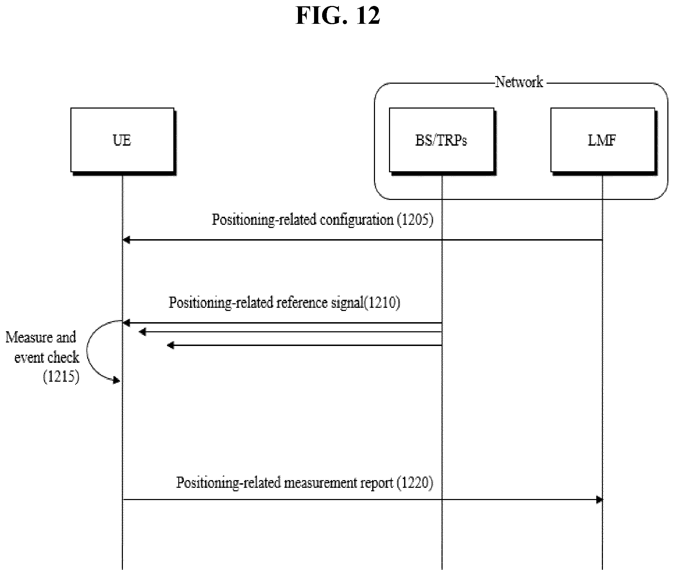

FIG. 12 is a diagram for explaining an operation of a UE and a network according to an embodiment.

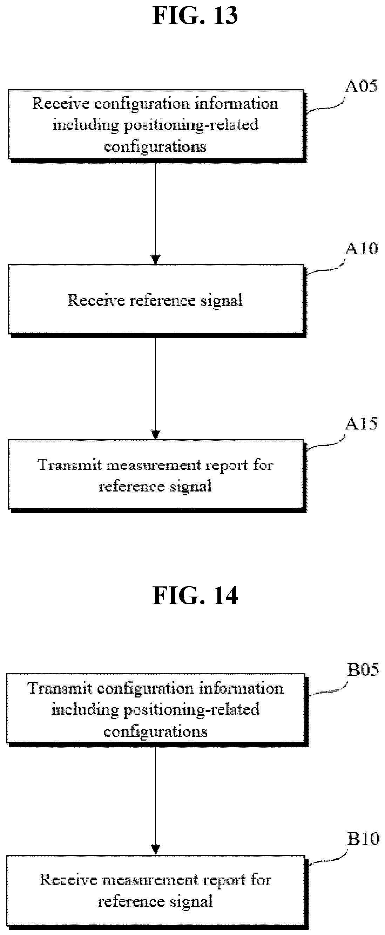

FIG. 13 is a diagram for explaining an operation of a first device according to an embodiment.

FIG. 14 is a diagram for explaining an operation of a second device according to an embodiment.

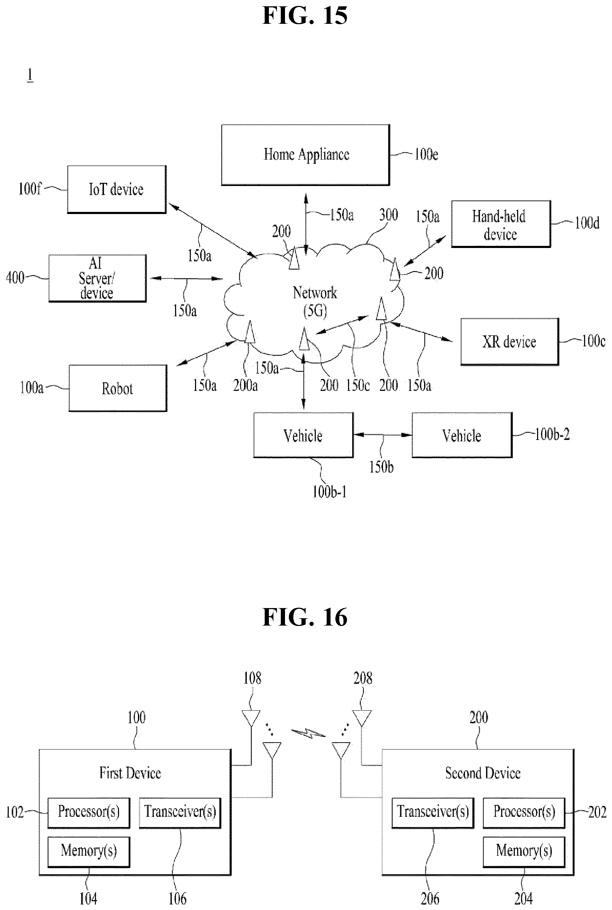

FIGS. 15 to 18 illustrate an example of a communication system 1 and wireless devices applicable to the present disclosure.

**DETAILED DESCRIPTION**

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321 Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment

- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG(Secondary Cell Group) Cell
- CA: Carrier Aggregation
- WUS: Wake up Signal
- TX: Transmitter
- RX: Receiver

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference Of Arrival)

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi,_1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$T_{ADV}$ Type 1 = (ng-eNB Rx-Tx time difference)+(UE E-UTRA Rx-Tx time difference)

$T_{ADV}$ Type 2 = ng-eNB Rx-Tx time difference

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$RTT = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

**Event triggered positioning adaptation**

Various techniques may be used to perform positioning in NR, including timing-based methods (e.g. DL-TDOA, UL-RTOA, Multi RTT), angle-based methods (e.g. AoA, AoD), and cell ID-based methods (e.g. E-CID) as described above. In addition, in Rel-18, support for carrier phase measurement based positioning (i.e. NR carrier phase measurement) is discussed.

The phase measurement-based positioning described herein may include at least one of CPM and/or ScPM:

- Carrier Phase Measurement (CPM): In CPM-based positioning, a method of performing and utilizing a phase measurement based on a carrier frequency of a received signal to measure a propagation delay of a reference signal caused by a distance between a BS and a UE has been discussed.
- SubCarrier Phase Measurement (ScPM): (In addition to CPM), a ScPM method is also being considered in which the BS and the UE acquire and utilize, from the measurement, the tendency of the phase difference between subcarriers through the received reference signal.

CPM-based positioning techniques are similar to timing-based positioning techniques in that the propagation delay caused by the distance between the BS and the UE is acquired from measurements. CPM-based positioning may be suitable for achieving higher positioning accuracy than timing-based positioning, but it differs from timing-based positioning techniques in that it provides range information for a larger distance without ambiguity.

Each positioning method may have different advantages and disadvantages and may be useful in different environments. For example, in the case of CPM-based positioning, when the channel environment is good, it may be advantageous in obtaining precise positioning accuracy in a unit of cm. However, when the channel environment is bad, the accuracy may be significantly reduced due to problems such as integer ambiguity and the influence of non-line of sight (NLOS) path, and it may have relatively low efficiency when considering required UE complexity and reporting overhead. An example of a problem of integer ambiguity is that when Phase = $\alpha+2\pi*\beta$, if $\beta$ is an integer, the measured phase value may be the same as $\alpha$, and thus there may be a problem in terms of ambiguity in that it is difficult to distinguish between integer values such as $\beta = 0, 1, 2..$

In the current NR standard, when a UE is instructed to provide a measurement report for a specific positioning method from an LMF, it is required to comply the measurement report regardless of a channel environment or a state of the UE. Therefore, there is a problem in that the UE is not capable of independently determining and performing another form of positioning when an instructed positioning scheme is not suitable for intended target accuracy or when it is difficult to obtain measurement using the positioning scheme due to influences of the channel environment.

Considering the above problems, the specification proposes methods for a UE to select an appropriate positioning method or measurement and reporting operation based on a specific event. For example, the UE may select an appropriate positioning method or measurement and reporting operation based on a specific event to obtain more reliable positioning results and prevent inefficient positioning operations by considering events that the UE is capable of measuring, such as a given channel state. In particular, the proposed method may be useful when measurements with similar characteristics, such as CPM-based positioning and timing-based positioning are supported, and dynamic switching between two or more positioning schemes with complementary advantages and disadvantages is supported.

The specification describes a method that proposes CPM-based positioning and timing-based positioning schemes based on a 3GPP NR system. However, the proposed methods are not limited thereto, and may be generally expanded and applied even when there are two or more positioning schemes to be supported by a BS and a UE, and when the positioning schemes are consistent or related in the operation of taking measurement. Therefore, the proposed methods may be applied to all types of transmission and reception methods expected by a BS and a UE.

One or more of the proposed methods below may be applied in combination or may operate independently without any separate combination. Some terms, symbols, and sequences used may be replaced by other terms, symbols, and sequences.

According to an embodiment of the present specification, when an upper node instructs a UE to perform and/or report positioning, there may be one or more possible methods of a positioning method performed according to the instruction, and methods in which the UE selects and performs one of the positioning methods based on a specific event are proposed.

In this case, the upper node is a node that indicates positioning, and in NR, an LMF may function as the upper node. However, when there is a specific UE that instructs positioning or triggers an operation to another UE, the specific UE may be provided in a concept of the upper node referred to in the present disclosure, and for example, a BS or a UE (e.g., when SL positioning is performed) may be provided in the concept of the upper node.

FIG. 10 illustrates a procedure for an operation of a network node (e.g., an upper node of a UE or an LMF) according to an embodiment.

Referring to FIG. 10, the upper node may generate configuration information of positioning and transmit the configuration information to the UE (FC101). In this case, the configuration information may include information about positioning methods to be performed by the UE and may also include configuration information required to perform the positioning methods. For example, the configuration information may be provided to the UE through a higher layer signal (e.g. positioning SIB) transmitted from the BS or through higher layer signaling (e.g. LPP) transmitted from the LMF.

Then, the upper node may transmit instruction information instructing positioning to a target UE that intends to obtain positioning information (FC102). In this case, the instruction information may include information on positioning method(s) that the UE is capable of selecting based on the indicated information. For example, the instruction information may be provided to the UE through higher layer signaling (e.g. LPP) transmitted from the LMF.

Then, the upper node may receive the results of the positioning measurement reported by the target UE and perform an operation of estimating the location of the target UE by using the results. In this case, the upper node may obtain information about the positioning method performed by the UE based on the information reported by the UE. For example, the report may be provided to the UE through higher layer signaling (e.g. LPP) transmitted from the LMF.

FIG. 11 illustrates a procedure of an operation of a UE that performs positioning measurement.

Referring to FIG. 11, the UE may receive configuration information of positioning and then expect to perform a positioning operation based on the configured information (FC201). In this case, the configuration information may include information about positioning methods to be performed by the UE and may also include configuration information required to perform the positioning methods. For example, the configuration information may be provided to the UE through a higher layer signal (e.g. positioning SIB) transmitted from the BS or through higher layer signaling (e.g. LPP) transmitted from the LMF.

Then, the UE may monitor and receive positioning instruction information indicated by a positioning upper node (FC202). In this case, the instruction information may include information on positioning method(s) that the UE is capable of selecting based on the indicated information. For example, the instruction information may be provided to the UE through higher layer signaling (e.g. LPP) transmitted from the LMF.

Then, the UE may select a positioning method or a measurement target based on a condition of a promised event (FC203). In this case, whether the event is configured and conditions required to determine the event may be determined based on the received configuration information or the instruction information.

Then, the UE may select a positioning method or configure the results of the measurement report depending on the results determined by the event (FC204a and FC204b). The example in the diagram shows a structure in which one of two methods is selected by the event, but the method proposed in the disclosure is not limited to the example in the diagram, and may be generally applied to a method in which one of one or more methods is selected.

Then, the UE may report the results of the performed positioning measurement to the upper node (FC205). For example, the report information may be provided to the LMF through higher layer signaling (e.g. LPP) transmitted from the UE.

**[Proposal 1] Positioning instruction information provided by upper node to UE**

A method of configuring positioning instruction information provided by an upper node to a UE and an accompanying operation of the UE may be selected from one of the options below, or two or more options may be combined and used.

**(Option 1-1) Instruction information includes information on one or more positioning methods, and UE selects a positioning method based on an event.**

Option 1-1 proposes a method in which the instruction information provided by the upper node to the UE includes information about one or more positioning methods. In this case, the positioning method provided in the instruction information may indicate a candidate for the positioning method that the UE is capable of selecting, and a method is proposed in which one of the positioning methods provided in the instruction information is selected according to an event condition. In this case, a positioning method that is not provided in the positioning method provided in the instruction information may be configured not to be selected according to the event condition.

In Proposal 1, the UE may select and perform one of the positioning methods instructed through the instruction information based on the event condition. In this case, the UE may be configured not to select a positioning method that is not provided in the instruction information.

In Proposal 1, the upper node may provide the UE with instruction information related to positioning methods that the UE is capable of selecting based on the event condition through instruction information, and it may be expected that the UE may select and perform one of the positioning methods. In this case, when there is a positioning method that the upper node intends to instruct the UE not to perform, it may be determined not to include the positioning method in the instruction information.

As an example in which Proposal 1 applies, the LMF may determine candidates for positioning methods that the UE is capable of selecting and provide the candidates to the UE through an LPP. In this case, an LPP provided by the LMF may be assistance data transmitted as a ProvideAssistanceData message body defined in the 3GPP TS 37.355 standard, and this method may be advantageous of reducing signaling overhead when candidates for positioning methods do not change frequently. Alternatively, the LPP provided by the LMF may be a request for positioning measurements transmitted as a RequestLocationInformation message body defined in the 3GPP TS 37.355 standard, and this method has an advantage in that the LMF is capable of quickly switching information on candidates for positioning methods required according to the situation.

Proposal 1 is advantageous in that information on enable/disable of positioning methods to be selected by the UE dynamically and/or UE-separately is provided, while additionally transmitting specific information about each positioning method.

**(Option 1-2) Instruction information includes information on one positioning method, and UE selects a positioning method to be actually performed, based on an event.**

Option 1-2 proposes a method in which the instruction information provided by the upper node to the UE includes information about one positioning method. In this case, the positioning method provided in the instruction information may indicate a candidate for the positioning method that the UE is capable of selecting, and a method is proposed in which the positioning method provided in the instruction information is selected when an event condition is satisfied. When the event condition is not satisfied (or application of the positioning method provided in the instruction information is not permitted due to the event condition), a specific predefined positioning method may be determined to be selected.

The UE may determine to select whether to apply the positioning methods instructed through the instruction information based on the event condition. In this case, the UE may select the positioning method provided in the instruction information or select another specific positioning method not included in the instruction information according to the event condition.

The upper node may provide instruction information related to the positioning method that the UE is capable of selecting based on the event condition through instruction information. In this case, the upper node may expect that the UE may perform the positioning method provided in the instruction information or another specific positioning method.

A relationship between the positioning method provided in the instruction information and the specific positioning method to be selected by the event condition may be predetermined according to the standard or may be predetermined by the upper node such that the information is provided to a UE. For example, a phase measurement based positioning method and a timing based positioning method may be determined as positioning method candidates to be selected based on the event condition. As a specific example, the phase measurement based positioning method may include a CPM-based positioning method and a ScPM-based positioning method, and the timing based positioning method may include a TDOA positioning method. The upper node may pre-provide information indicating that the phase measurement based positioning method and the timing based positioning method may be selected based on the event condition and determine to indicate one method through the instruction information.

Options 1-2 may include a method that depends on the positioning method indicated to be selected according to the event condition. For example, when a specific positioning method (hereinafter Pos-A) is indicated through instruction information, it may be permitted that another specific positioning method (hereinafter Pos-B) may be selected depending on the event condition, and conversely, when Pos-B is indicated through instruction information, it may be determined that selection of Pos-A depending on the event condition is not permitted. As a specific example, if phase measurement based positioning is indicated through instruction information, the UE may be allowed to select timing based positioning according to the event condition. However, when timing based positioning is indicated through instruction information, selection of a positioning method based on the event condition may not be allowed. This may be for the purpose of allowing a UE to select an appropriate positioning method considering a channel environment while instructing the UE to perform high accuracy positioning only when the upper node is required, while preventing application of an unnecessary high accuracy positioning method when the upper node is not required.

For example, the LMF may determine candidates for positioning methods that the UE is capable of selecting and provide the candidates to the UE through an LPP. In this case, the LPP provided by the LMF may be assistance data transmitted as the ProvideAssistanceData message body defined in the 3GPP TS 37.355 standard. The information provided in this case may include positioning methods to be selected according to the event condition and may also include whether selection of a positioning method according to the event condition is possible through instruction information (e.g. whether it is Pos-A or Pos-B in the above example). Then, the LMF may indicate one of the positioning methods via the LPP of the request for positioning measurements transmitted as the RequestLocationInformation message body defined in the 3GPP TS 37.355 standard. If supported or configured, the UE may perform selection of the positioning method according to the event condition when the positioning method indicated by the instruction information corresponds to Pos-A, and when the positioning method corresponds to Pos-B, the UE may be determined to perform the indicated positioning method.

When Option 1-2 is applied, instructions for specific positioning measurements for the positioning method selected according to the event condition may not be expressed in the instruction information. Therefore, when the UE selects a positioning method selected according to the event condition rather than a positioning method indicated by the instruction information, a method of determining information about specific positioning measurements to be assumed and applied may be required. To this end, one of the following sub-options may be used.

(Sub-Option 1-2-A) When a positioning method selected according to an event condition is used, information from a single default positioning measurement defined in the standard may be determined to be used. It may be advantageous in that this simplifies UE operation without causing separate signaling overhead.

(Sub-Option 1-2-B) When a positioning method selected according to an event condition is used, one of multiple default positioning measurement information candidates defined in the standard may be determined to be used, and a selection reference may be determined to be based on the positioning measurement information provided for the positioning method indicated by the instruction information. It may be advantageous in that this allows for adaptive positioning measurements to be performed without causing separate signaling overhead.

(Sub-Option 1-2-C) The upper node may provide a connection relationship between the positioning measurement information of the positioning method selected according to an event condition and the positioning measurement information of the positioning method indicated by the instruction information through separate configuration information, and when the positioning method selected according to the event condition is used, the UE may be configured to use the positioning measurement information that has a connection relationship with the positioning measurement information provided for the positioning method indicated by the instruction information. This may be advantageous in terms of flexibility by allowing the upper node to determine a level of positioning measurement as needed.

Option 1-2 may be advantageous of providing information on enable/disable of positioning methods to be selected by the UE dynamically and/or individually to the UE without significantly increasing signaling overhead for providing the instruction information.

**(Option 1-3) Signaling information indicating whether event based positioning method selection is allowed or not.**

Option 1-3 proposes a method in which the instruction information provided by the upper node to the UE includes information on whether to allow (or prefer) selection of the positioning method according to an event condition. In this case, when allowed, the UE may determine to determine the positioning method by considering the event condition, and for example, option 1-1 or option 1-2 proposed in the present disclosure may be applied. When not allowed, the UE may follow the positioning method indicated by the corresponding instruction information and determine not to perform an operation according to the event condition. When the information is information about preference, the UE may determine whether to perform selection of a positioning method according to the event condition by considering preference of the upper node.

In Option 1-3, the UE may determine to select the positioning method to be applied based on whether the event condition instructed through the instruction information is allowed. When allowed in this case, the UE may select the positioning method provided in the instruction information or select another specific positioning method not included in the instruction information according to the event condition. When not allowed, the UE may only apply the positioning method indicated by the instruction information.

In Option 1-3, the upper node may provide information through instruction information on whether the UE is capable of selecting a positioning method based on the event condition. In this case, when the upper node allows the UE to select a positioning method based on the event condition, the upper node may expect that the UE may perform the positioning method provided in the instruction information or perform another specific positioning method. Alternatively, when the upper node does not allow the UE to select a positioning method based on the event condition, the upper node may expect the UE to use the positioning method indicated by the indication information.

As an example of Option 1-3, the LMF may determine whether to allow selection of a positioning method according to the event condition and provide the determination to the UE through an LPP. In this case, the LPP provided by the LMF may be assistance data transmitted as a ProvideAssistanceData message body defined in the 3GPP TS 37.355 standard, and this method may be advantageous of reducing signaling overhead. Alternatively, the LPP provided by the LMF may be a request for positioning measurements transmitted as a RequestLocationInformation message body defined in the 3GPP TS 37.355 standard, and this method may be advantageous in that the LMF is capable of quickly switching an operation of the UE according to the situation.

Option 1-3 may be advantageous in that the UE is allowed to freely select an appropriate positioning method by dynamically and/or individually providing UEs with the capability to select a positioning method based on the event condition, while providing a structure that allows an upper UE to instruct a specific positioning method with less signaling overhead when necessary.

When Proposal 1 is used, if the UE selects a positioning method based on the event condition, the UE may determine to include the result in the measurement report and transmit the result to the upper node.

Proposal 1 may be determined to apply only to some of the positioning methods that the UE is capable of supporting. When there exists a combination of positioning methods (hereinafter, PM_set A) to be selected according to an event condition and positioning methods (hereinafter, PM_set B) to be performed regardless of the event condition, when the instruction information includes only information on the positioning methods belonging to PM_set A, the UE may determine to select one positioning method, when the instruction information includes only information on the positioning methods belonging to PM_set B, the UE may determine to select all positioning methods provided in the instruction information, and when the instruction information includes positioning methods belonging to PM_set A and PM_set B, the UE may determine to select one of the positioning methods belonging to PM_set A and all positioning methods of PM_set B. In this case, information about the positioning methods included in the PM_set A (or PM_set B) may be information predefined in the standard or configured by the upper node.

As an example of this, a case may be considered in which the PM_set A includes a phase measurement based positioning method and a timing based positioning method. As a specific example, the phase measurement based positioning method may include a CPM-based positioning method and a ScPM-based positioning method, and the timing based positioning method may include a TDOA positioning method. These two schemes have in common that the schemes estimate an influence of a propagation delay of a reference signal between a transmitting node and a receiving node, and considering a difference in a relatively favorable channel environment and an achievable accuracy, it may be expected that the schemes have an advantage in that the UE is capable of selecting an appropriate positioning method according to the event condition while performing a consistent measurement report for information to be expressed.

**[Proposal 2] Reference for Event Condition**

The reference of the event condition used by a UE to determine a positioning method may be one of the options below or a combination of two or more options.

**(Option 2-1) Configuration of event condition based on signal measurement (e.g., RSRP)**

In Option 2-1, at least one signal measurement may be used as an event condition for determining a positioning method. At least one signal measurement may include RSRP. A signal for RSRP measurement may include a reference signal (e.g. PRS) used by a UE to take positioning measurement, or another reference signal (e.g. SSB or CSI-RS/TRS) that is related to the reference signal (e.g. transmitted with the same TRP and/or assume QCL relationship) may be used.

In detail, it may be determined whether an event occurs based on whether an RSRP value of a specific reference signal used as an event condition has a value equal to or greater than a specific threshold. In this case, the reference of the RSRP may be predetermined according to the standard or a value determined by an upper node and provided to the UE may be used. Alternatively, the reference of the RSRP may be used in a way that the UE determines (or prefers) the value itself and reports the value to the upper node.

For example, when the proposed method for NR DL positioning is applied, the event condition of the RSRP may be determined based on TRP, PRS resource set, and/or PRS resource. If a TRP or PRS resource set is used as a reference, the maximum (or minimum) RSRP value from among the PRS resources provided in the same TRP or PRS resource set may be applied as the reference for the event condition, or an average RSRP value may be applied as the reference for the event condition.

When measurement of multiple paths is allowed for one TRP (or PRS resource) (e.g. RSRPP measurement is possible), the reference of the RSRP used may be determined to be applied based on one path, and for example, the RSRP value of the first path may be determined to be used.

For example, a phase measurement based positioning method and a timing based positioning method may be considered to be selected according to an event condition based on RSRP. As a specific example, as described above, the phase measurement based positioning method may include at least one of a CPM-based positioning method and a ScPM-based positioning method, and the timing based positioning method may include a TDOA positioning method. In this case, if the RSRP of the reference signal that serves as the reference has a value equal to or greater than a specific threshold value, the UE may determine to select a phase measurement based positioning method, and if not, the UE may determine to select a timing based positioning method. This may be a useful method considering that the phase measurement based positioning method requires relatively high SINR performance while providing relatively high positioning accuracy, whereas the timing based positioning method provides relatively stable positioning accuracy even at low SINR performance.

Option 2-1 has an advantage of allowing the UE to select a positioning method based on the RSRP measured by the UE in a situation in which the optimal positioning method may differ depending on the RSRP value of the received signal (i.e. SINR situation).

**(Option 2-2) Configuration of event condition based on LOS-NLOS environment**

Option 2-2 proposes a method of using influence of an LOS-NLOS environment as an event condition to determine a positioning method. In this case, a signal for calculating the influence of the LOS-NLOS environment may be a reference signal (e.g. PRS) used by the UE to take positioning measurements, or another reference signal (e.g. SSB or CSI-RS/TRS) that is related to the reference signal (e.g. transmitted with the same TRP and/or may assume a QCL relationship) may be used. As a specific example, the influence of the LOS-NLOS environment may be measured using the reference of an LOS-NLOS indicator defined in the 3GPP NR Rel-17 standard.

In detail, it may be determined whether an event occurs based on whether the LOS-NLOS indicator value used as the event condition has a value equal to or greater than a specific threshold. In this case, the reference of the LOS-NLOS indicator may be predetermined according to the standard or a value determined by an upper node and provided to the UE may be used. Alternatively, the reference of the LOS-NLOS indicator may be used in a way that the UE determines (or prefers) the value itself and reports the value to the upper node.

For example, a phase measurement based positioning method and a timing based positioning method may be considered to be selected according to an event condition based on RSRP. As a specific example, the phase measurement based positioning method may include a CPM-based positioning method and a ScPM-based positioning method, and the timing based positioning method may include a TDOA positioning method. In this case, if a scale of the LOS-NLOS environment of the reference signal that serves as the reference has a value equal to or greater than a specific threshold value, the UE may determine to select a phase measurement based positioning method, and if not, the UE may determine to select a timing based positioning method. This may be a useful method considering that the phase measurement based positioning method may be sensitive to performance degradation due to NLOS paths because the method provides relatively high positioning accuracy, whereas the timing based positioning method may be less sensitive to NLOS because the method provides relatively low resolution positioning accuracy.

Option 2-2 is expected to have an advantageous effect of allowing the UE to select a positioning method based on the LOS-NLOS environment situation measured by the UE in a situation in which the optimal positioning method may differ depending on the LOS-NLOS environment situation of the received signal.

**[Proposal 3] Configuration of measurement report** by UE according to event condition

A method by which the UE determines the positioning method based on the event condition and configures the measurement report accordingly may be one of the options below, or two or more options may be combined.

**(Option 3-1) Apply event condition based on Reference TRP**

Option 3-1 proposes a method of determining a positioning method by applying an event condition based on a signal transmitted and received with respect to a reference TRP. To this end, the method may include a process in which an upper node or a UE determines a reference TRP and transmits and receives information about the reference TRP. In this case, the reference TRP means a TRP that serves as a reference when the UE reports a positioning measurement result for one or more TRPs, and for example, when a TDOA scheme supported by the 3GPP NR standard is used, the reference TRP may be a TRP that serves as a timing reference used to report a timing measurement value of other TRPs (hereinafter referred to as Other-TRPs). When phase measurement based positioning is introduced, a similar method may be applied such that a TRP as a phase reference of the phase measurement report may be defined as the reference TRP. In the proposed method, the reference of the reference TRP may be replaced and used with the reference of the reference PRS resource set or the reference PRS resource.

In Option 3-1, if the positioning method is determined based on the event condition applied to the reference signal transmitted and received in the reference TRP, the same positioning method may be applied to all the remaining Other-TRPs to calculate the positioning measurement, and the measured positioning measurement value may be reported.

Option 3-1 may be advantageous in terms of simplifying an operation of a UE because the UE determines the positioning method by applying the event condition based on a single TRP.

**(Option 3-2) Determine positioning method based on number of TRPs that satisfy event condition**

Option 3-2 proposes a method of applying an event condition to each signal transmitted and received for multiple TRPs and determining a positioning method commonly applied to the positioning report based on the overall result of the event condition. In this case, the multiple TRPs may include a reference TRP and may also include Other-TRPs. To this end, the method may include a process in which an upper node or a UE determines a reference TRP and transmits and receives information about the reference TRP. In this case, the reference TRP means a TRP that serves as a reference when the UE reports a positioning measurement result for one or more TRPs, and for example, when a TDOA scheme supported by the 3GPP NR standard is used, the reference TRP may be a TRP that serves as a timing reference used to report a timing measurement value of other TRPs (hereinafter referred to as Other-TRPs). When phase measurement based positioning is introduced, a similar method may be applied such that a TRP as a phase reference of the phase measurement report may be defined as the reference TRP. In the proposed method, the reference of the reference TRP may be replaced and used with the reference of the reference PRS resource set or the reference PRS resource.

In Option 3-2, for each reference signal received by a UE from multiple TRPs, whether an event condition is satisfied is determined, and a positioning method is determined based on whether the number of TRPs (or PRS resources or PRS resource sets) satisfying the event condition exceeds a threshold value. Depending on the determined positioning method, positioning measurement for a TRP (or PRS resource or PRS resource set) to be reported is calculated, and the measured positioning measurement value is reported.

In this case, the TRP (or PRS resource or PRS resource set) to be reported may be determined based on the event condition. For example, if the number of TRPs (or PRS resources or PRS resource sets) that satisfy the event condition exceeds a threshold, the TRPs (or PRS resources or PRS resource sets) that are a target of reporting may be selected in whole or in part by limiting them to TRPs (or PRS resources or PRS resource sets) that satisfy the event condition. Conversely, if the number of TRPs (or PRS resources or PRS resource sets) that satisfy the event condition is less than or equal to a threshold, the TRPs (or PRS resources or PRS resource sets) that are a target of reporting may be determined to be selected in whole or in part from among all TRPs (or PRS resources or PRS resource sets) for which the UE successfully receives the reference signal.

In this case, the threshold may be a value preset by the standard or a value determined by the upper node and provided to the UE. Alternatively, the threshold may be obtained by reporting a value determined (or preferred) by the UE to the upper node.

Option 3-2 may have an advantage of receiving a result that satisfies the event condition in terms of the upper node, which is a subject performing final positioning because it considers whether the environment in which the reference signal received for each TRP is suitable for a specific positioning method. Considering that the accuracy of the final positioning result may be affected by the number of TRPs used for positioning, if there is an insufficient number of TRPs suitable for applying a specific positioning method, it may have an advantage of enabling adaptive measurement reporting to the environment by determining not to use the corresponding positioning method and instead apply an alternative positioning method.

**(Option 3-3) Determine positioning method for each TRP by applying event condition based on each target TRP.**

Option 3-3 proposes a method of applying an event condition to each signal transmitted and received for multiple TRPs and determining a positioning method applied to a positioning report for each TRP. In this case, the multiple TRPs may include Other-TRPs. To this end, the method may include a process in which an upper node or a UE determines a reference TRP and transmits and receives information about the reference TRP. In this case, the reference TRP means a TRP that serves as a reference when the UE reports a positioning measurement result for one or more TRPs, and for example, when a TDOA scheme supported by the 3GPP NR standard is used, the reference TRP may be a TRP that serves as a timing reference used to report a timing measurement value of other TRPs (hereinafter referred to as Other-TRPs). When phase measurement based positioning is introduced, a similar method may be applied such that a TRP as a phase reference of the phase measurement report may be defined as the reference TRP. In the proposed method, the reference of the reference TRP may be replaced and used with the reference of the reference PRS resource set or the reference PRS resource.

In Option 3-3, for each reference signal received by a UE from multiple TRPs, whether an event condition is satisfied is determined, the positioning method to be applied is determined for each TRP (or PRS resource or PRS resource set) based on whether an event condition is satisfied. The positioning measurement for the TRP (or PRS resource or PRS resource set) to be reported is calculated according to each determined positioning method, and the measured positioning measurement value is reported.

In this case, the TRP (or PRS resource or PRS resource set) to be reported may be determined differently according to the positioning method determined based on the event condition. For example, if the positioning method is a TRP determined by the phase measurement based a positioning method according to the event condition, a reporting target may be determined based on information of the reference TRP used in the positioning report. As a specific example, the TRP to be reported may be determined such that all or part of the TRPs are selected only from a group (e.g. positioning frequency layer) that shares the same configuration information as the reference TRP. If another positioning method determined according to the event condition is a timing-based positioning method, the UE may determine to select all or part of the TRPs that successfully receive the reference signal, regardless of the information of the reference TRP. If the event condition is satisfied but the group does not share the same configuration information as the reference TRP, the TRP may be excluded from the reporting target, or it may be considered a TRP that does not satisfy the event condition and another positioning method (e.g. timing based positioning method) may be applied to determine whether the corresponding TRP is a reporting target. This may be for selecting the TRP to be reported by applying a difference in the method of determining the reporting target depending on the positioning method. For example, in the case of phase measurement based positioning, factors such as carrier frequency and/or initial phase error may differ depending on the group (e.g. frequency layer), whereas in the case of the TDOA scheme, it may be suitable for the purpose of supporting measurement regardless of the frequency layer of the TRP.

Option 3-3 may have an advantage of receiving a result that satisfies the event condition in terms of the upper node, which is a subject performing final positioning because it considers whether the environment in which the reference signal received for each TRP is suitable for a specific positioning method. When different positioning schemes with common measurement characteristics (e.g. phase measurement based positioning and time based positioning) are selected based on an event condition, it may be advantageous to allow both of positioning schemes instead of discarding the measurement results for TRPs (or PRS resources or PRS resource sets) that do not satisfy the event condition, thereby providing more information to the upper node when calculating the final positioning results.

FIG. 12 is a diagram for explaining an operation of a UE and a network according to an embodiment. In FIG. 12, the network may include a plurality of network nodes (e.g., BS/TRP and LMF server). For convenience of explanation, the term LMF used may be replaced with other terms. FIG. 12 is an implementation example of the proposals 1 to 3 described above, and the contents described in proposals 1 to 3 may be referred to help understanding FIG. 12.

Referring to FIG. 12, the LMF may transmit positioning-related configuration information to the UE through higher layer signaling (1205). The positioning-related configuration information provided by the LMF may be transmitted to the UE via BS/TRPs. The positioning-related configuration information may include different types of positioning-related configurations. The different types of positioning-related configurations may include at least one of configuration for phase measurement based positioning (e.g., CPM or ScPM) and a configuration for timing based positioning (e.g., OTDOA/RSTD). Different event conditions may be associated with the different types of positioning-related configurations, respectively. The event conditions may be based on Proposal 2 described above. For example, at least one of the event conditions may be related to reference signal received power (RSRP) measured via the reference signal. At least one of the event conditions may be related to line of sight (LoS)/non-line of sight (NLoS) determination for the reference signal.

The BS/TRPs may transmit a positioning-related reference signal to the UE (1210). The UE may measure the positioning-related reference signal and determine whether each event condition is satisfied based on the measurement (1215).

The UE may transmit a measurement report for a reference signal based on satisfaction of a specific event condition and positioning-related configurations associated with the satisfied specific event condition (1220). The measurement report may be transmitted to the LMF via the BS/TRPs.

For example, the UE may autonomously determine to perform measurement/reporting for phase measurement-based positioning (e.g., CPM or ScPM) based on satisfaction of an event condition related to phase measurement-based positioning (e.g., CPM or ScPM). The UE may autonomously determine to perform measurement/report for timing-based positioning (e.g., OTDOA/RSTD) based on satisfaction of the event condition associated with timing-based positioning (e.g., OTDOA/RSTD). In other words, the phase measurement-based positioning (e.g., CPM, ScPM) or the timing-based positioning (e.g., OTDOA/RSTD) may be selected by the UE based on whether the associated event condition is satisfied.

For example, whether each event condition is satisfied may be determined based on a reference signal from a reference TRP specified by the network.

For example, the UE may receive information from the network indicating a candidate positioning-related configuration the UE may be able to select on its own. For example, the UE may receive information about candidates from among different types of positioning-related configurations that the UE may select on its own based on satisfaction of the event condition.

FIG. 13 is a diagram for explaining an operation of a first device according to an embodiment. The first device may be a UE or a network node (e.g., BS or TRP) in a wireless communication system.

Referring to FIG. 13, the first device may receive configuration information including different types of positioning-related configurations (A05). Event conditions may be associated with the different types of positioning-related configurations, respectively. The configuration information may include information about the event conditions associated with the different types of positioning-related configurations.

The first device may receive a reference signal for positioning (A10).

The first device may transmit a measurement report for the reference signal based on at least one of the different types of positioning-related configurations (A15). Based on satisfaction of a first event condition, the first device may transmit the measurement report for the reference signal based on a first type of positioning-related configuration associated with the first event condition.

At least one of the event conditions may be related to reference signal received power (RSRP) measured via the reference signal.

At least one of the event conditions may be related to line of sight (LoS)/non-line of sight (NLoS) determination for the reference signal.

The different types of positioning-related configurations may include a configuration for phase measurement-based positioning and a configuration for timing-based positioning. Based on whether the associated event condition is satisfied, either the phase measurement-based positioning or the timing-based positioning may be selected by the first device.

The measurement report for the reference signal may be related to multiple transmission and reception points (TRPs). Whether each of the event conditions is satisfied may be determined based on a reference signal from a reference TRP from among the plurality of TRPs.

The first device may receive information about at least one candidate positioning-related configuration that the first device is capable of selecting from among the different types of positioning-related configurations provided in the configuration information.

The first device may be a user equipment (UE), and the reference signal may be a downlink positioning reference signal (PRS) provided from at least one BS or at least one TRP.

The configuration information may be received via higher layer signaling from at least one BS or at least one TRP or via higher layer signaling from a LMF node.

FIG. 14 is a diagram for explaining an operation of a second device according to an embodiment. The second device may include at least one network node (e.g., BS/TRP and/or LMF) in a wireless communication system.

Referring to FIG. 14, the second device may transmit, to the first device, configuration information including different types of positioning-related configurations (B05). Event conditions may be associated with the different types of positioning-related configurations, respectively.

The second device may receive the measurement report for the reference signal based on at least one of the different types of positioning-related configurations (B10). Based on satisfaction of a first event condition, the second device may receive, from the first device, the measurement report for the reference signal based on a first type of positioning-related configuration associated with the first event condition.

At least one of the event conditions may be related to reference signal received power (RSRP) measured via the reference signal.

At least one of the event conditions may be related to line of sight (LoS)/non-line of sight (NLoS) determination for the reference signal.

The different types of positioning-related configurations may include a configuration for phase measurement-based positioning and a configuration for timing-based positioning. Based on whether the associated event condition is satisfied, either the phase measurement-based positioning or the timing-based positioning may be selected by the first device.

The measurement report for the reference signal may be related to multiple transmission and reception points (TRPs). Whether each of the event conditions is satisfied may be determined based on a reference signal from a reference TRP from among the plurality of TRPs.

The second device may transmit, to the first device, information about at least one candidate positioning-related configuration that the first device is capable of selecting from among the different types of positioning-related configurations provided in the configuration information.

The reference signal may be a downlink positioning reference signal (PRS) provided from at least one BS or at least one TRP.

The configuration information may be provided via higher layer signaling.

FIG. 15 illustrates a communication system 1 applied to the present disclosure.

Referring to FIG. 15, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 16 illustrates wireless devices applicable to the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

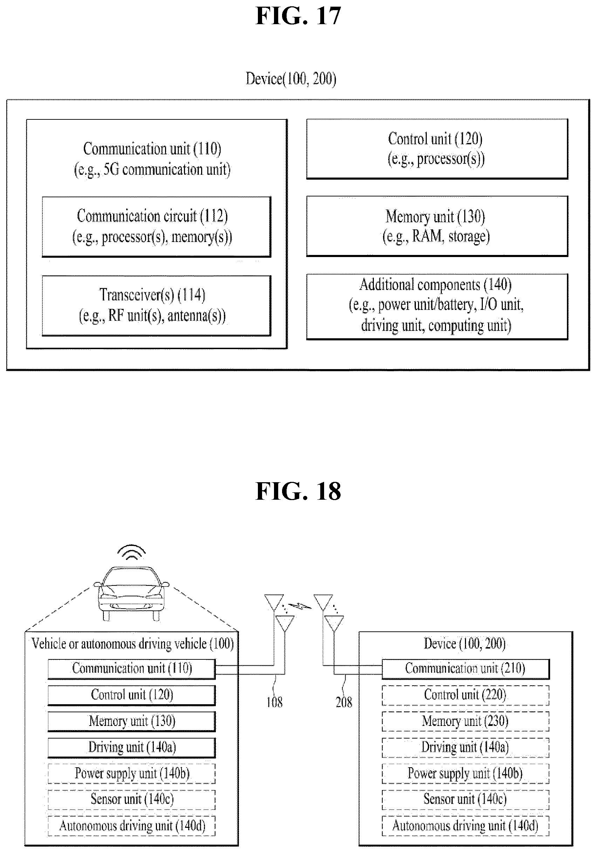

FIG. 17 illustrates another example of a wireless device applied to the present disclosure. The wireless device may be implemented in various forms according to a use-case/service (refer to FIG. 15).

Referring to FIG. 17, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 18 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Industrial Availability**

The present disclosure is applicable to UEs, BSs, or other apparatuses in a wireless mobile communication

# EP 4 572 445 A1

system.

## Claims

1. A method of operating a first device in a wireless communication system, the method comprising:

   receiving configuration information including different types of positioning-related configurations;
   receiving a reference signal for positioning; and
   transmitting a measurement report for the reference signal based on at least one of the different types of positioning-related configurations,
   wherein event conditions are associated with the different types of positioning-related configurations, respectively, and
   wherein, based on satisfaction of a first event condition, the first device transmits the measurement report for the reference signal based on a first type of positioning-related configuration associated with the first event condition.

2. The method of claim 1, wherein the configuration information includes information about the event conditions associated with the different types of positioning-related configurations.

3. The method of claim 1, wherein at least one of the event conditions is related to reference signal received power (RSRP) measured via the reference signal.

4. The method of claim 1, wherein the different types of positioning-related configurations include a configuration for phase measurement-based positioning and a configuration for timing-based positioning, and
   wherein, based on whether the associated event condition is satisfied, either the phase measurement-based positioning or the timing-based positioning is selected by the first device.

5. The method of claim 1, wherein at least one of the event conditions is related to line of sight (LoS)/non-line of sight (NLoS) determination for the reference signal.

6. The method of claim 1, wherein the measurement report for the reference signal is related to a plurality of transmission and reception points (TRPs), and
   wherein whether each of the event conditions is satisfied is determined based on a reference signal from a reference TRP from among the plurality of TRPs.

7. The method of claim 1, further comprising:
   receiving information about at least one candidate positioning-related configuration that can be selected by the first device from among the different types of positioning-related configurations provided in the configuration information.

8. The method of claim 1, wherein the first device is a user equipment (UE), and
   wherein the reference signal is a downlink positioning reference signal (PRS) provided from at least one base station (BS) or at least one transmission and reception point (TRP).

9. The method of claim 1, wherein the configuration information is received via higher layer signaling from at least one base station (BS) or at least one transmission and reception point (TRP) or received via higher layer signaling from a location management function (LMF) node.

10. A processor-readable recording medium having recorded thereon a program for performing the method of claim 1.

11. A first device for wireless communication, the first device comprising:

   a memory configured to store instructions; and
   a processor configured to perform operations by executing the instructions,
   wherein the operations of the processor include:

      receiving configuration information including different types of positioning-related configurations;
      receiving a reference signal for positioning; and
      transmitting a measurement report for the reference signal based on at least one of the different types of

22

positioning-related configurations,

wherein event conditions are associated with the different types of positioning-related configurations, respectively, and

wherein based on satisfaction of a first event condition, the processor is configured to transmit the measurement report for the reference signal based on a first type of positioning-related configuration associated with the first event condition.

12. The first device of claim 11, wherein the first device is an application specific integrated circuit (ASIC) or a digital signal processing device.

13. The first device of claim 11, further comprising

a transceiver,

wherein the first device is a user equipment (UE) operating in a wireless communication system.

14. A method of receiving a measurement report from a first device by a second device in a wireless communication system, the method comprising:

transmitting, to the first device, configuration information including different types of positioning-related configurations; and

receiving, from the first device, a measurement report for a reference signal based on at least one of the different types of positioning-related configurations,

wherein event conditions are associated with the different types of positioning-related configurations, respectively, and

wherein based on satisfaction of a first event condition, the second device receives, from the first device, the measurement report for the reference signal based on a first type of positioning-related configuration associated with the first event condition.

15. A second device for receiving a measurement report from a first device in a wireless communication system, the second device comprising:

a memory configured to store instructions; and

a processor configured to perform operations by executing the instructions,

wherein the operations of the processor include:

transmitting, to the first device, configuration information including different types of positioning-related configurations; and

receiving, from the first device, a measurement report for a reference signal based on at least one of the different types of positioning-related configurations,

wherein event conditions are associated with the different types of positioning-related configurations, respectively, and

wherein, based on satisfaction of a first event condition, the processor is configured to receive, from the first device, the measurement report for the reference signal based on a first type of positioning-related configuration associated with the first event condition.

# FIG. 1

| Initial Cell Search | System Information Reception | Random Access Procedure | | | | General DL/UL Tx/Rx S18 | |
|---|---|---|---|---|---|---|---|
| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |
| S11 | S12 | S13 | S14 | S15 | S16 | S17 | |

• DL/UL ACK/NACK
• UE CQI/PMI/Rank Report using PUSCH and PUCCH

# FIG. 2

...... | One Frame (10ms) | ......

...... | Half-Frame (5ms) | Half-Frame (5ms) | ......

...... | Subframe 0 (1ms) | ...... | Subframe 4 (1ms) | Subframe 5 (1ms) | ...... | Subframe 9 (1ms) | ......

Subframe (1ms)

15KHz | Slot (14 symbols) |

1ms

30KHz | Slot 0 (14 symbols) | Slot 1 |

500us

60KHz | Slot 0 (14 symbols) | Slot 1 | Slot 2 | Slot 3 |

250us

120KHz | Slot 0 (14 symbols) | Slot 1 | Slot 2 | Slot 3 | Slot 4 | Slot 5 | Slot 6 | Slot 7 |

125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

PDCCH

PUSCH

# FIG. 7

Reference Source

GNSS signals (B)

LPP

Measurements(A,B or A+B) or Location

Assistance Data

Target Device

UE/SET

Location server

E-SMLC/SLP/LMF

radio signals (A)

Reference Source

ACCESS NODE / BS / TS / NG-RAN

- E-CID Location Information Transfer
- OTDOA Information Transfer
- Reporting of General Error Situations

NRPPa

# FIG. 8

# FIG. 9

(a)

(b)

# FIG. 10

```
                                                          FC101
┌─────────────────────────────────────┐
│    Transmit positioning configuration│
│             information              │
└─────────────────────────────────────┘
                    │
                    ▼
                                                          FC102
┌─────────────────────────────────────┐
│     Transmit positioning instruction │
│             information              │
└─────────────────────────────────────┘
                    │
                    ▼
                                                          FC103
┌─────────────────────────────────────┐
│   Receive positioning measurement    │
│     information from target device   │
└─────────────────────────────────────┘
```

# FIG. 11

Receive positioning configuration information  —FC201

Receive positioning instruction information  —FC202

Determination for event  —FC203

Perform positioning method A (or perform measurement A)  —FC204a

Perform positioning method B (or perform measurement B)  —FC204b

Report positioning measurement  —FC205

# FIG. 12

# FIG. 13

Receive configuration information including positioning-related configurations — A05

Receive reference signal — A10

Transmit measurement report for reference signal — A15

# FIG. 14

Transmit configuration information including positioning-related configurations — B05

Receive measurement report for reference signal — B10

# FIG. 15

1

Home Appliance — 100e

100f — IoT device

Hand-held device — 100d

150a    300    150a

200

400 — AI Server/device

150a

Network (5G)

200

XR device — 100c

100a — Robot

150a    200a    150a    200    150c    200    150a

Vehicle — 100b-1

Vehicle — 100b-2

150b

# FIG. 16

108    208

100    200

First Device

Second Device

102 — Processor(s)    Transceiver(s)

Transceiver(s)    Processor(s) — 202

Memory(s)

Memory(s)

104    106

206    204

# FIG. 17

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 18

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108          208

Device (100, 200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| International application No. |
| --- |
| **PCT/KR2023/011642** |

| A. | CLASSIFICATION OF SUBJECT MATTER |
| --- | --- |

**H04W 64/00**(2009.01)i; **H04W 24/08**(2009.01)i; **H04W 24/10**(2009.01)i; **H04L 5/00**(2006.01)i; **G01S 5/02**(2010.01)i

According to International Patent Classification (IPC) or to both national classification and IPC

| B. | FIELDS SEARCHED |
| --- | --- |

Minimum documentation searched (classification system followed by classification symbols)

H04W 64/00(2009.01); G01S 3/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포지셔닝(positioning), 참조 신호(reference signal), 측정(measurement), 보고(report), 이벤트(event), 조건(condition)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br>Y | ERICSSON. [Post114-e][603][POS] Procedures and signalling for on-demand PRS (Ericsson). R2-2108400, 3GPP TSG-RAN WG2 Meeting #115-e. 11 August 2021.<br>See pages 3-6, 18 and 30-34. | 1-3,5-15<br>4 |
| Y | MODERATOR (INTERDIGITAL, INC.). Feature Lead summary #1 on Email discussion [109-e-R18-Pos-05] on integrity of RAT dependent positioning techniques. R1-2205344, 3GPP TSG RAN WG1 #109-e. 22 May 2022.<br>See pages 10 and 28. | 4 |
| A | QUALCOMM INCORPORATED. (TP for NRPPa baseline) LMF Assistance Information to support positioning in RRC_INACTIVE state. R3-221747, 3GPP TSG-RAN WG3 Meeting #115-e. 10 February 2022.<br>See pages 1-5. | 1-15 |
| A | ZTE et al. Discussion on on-demand PRS. R2-2107094, 3GPP TSG-RAN WG2 Meeting #115-e. 05 August 2021.<br>See pages 1-3. | 1-15 |

✓ Further documents are listed in the continuation of Box C.    ✓ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 November 2023** | **22 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/011642** |

**C.** **DOCUMENTS CONSIDERED TO BE RELEVANT**

| Category* | Citation of document, with indication, where appropriate, of the relevant passages | Relevant to claim No. |
|---|---|---|
| A | KR 10-2022-0045959 A (QUALCOMM INCORPORATED) 13 April 2022 (2022-04-13)<br>See paragraphs [0116]-[0124] and figure 10. | 1-15 |

**INTERNATIONAL SEARCH REPORT**
Information on patent family members

International application No.

**PCT/KR2023/011642**

| Patent document cited in search report | | | Publication date (day/month/year) | Patent family member(s) | | | Publication date (day/month/year) |
|---|---|---|---|---|---|---|---|
| KR | 10-2022-0045959 | A | 13 April 2022 | BR | 112022001955 | A2 | 03 May 2022 |
| | | | | CN | 114223221 | A | 22 March 2022 |
| | | | | EP | 4014060 | A1 | 22 June 2022 |
| | | | | JP | 2022-544468 | A | 19 October 2022 |
| | | | | TW | 202116091 | A | 16 April 2021 |
| | | | | US | 2021-0048500 | A1 | 18 February 2021 |
| | | | | WO | 2021-030444 | A1 | 18 February 2021 |

Form PCT/ISA/210 (patent family annex) (July 2022)